# FASCICULE DE BREVET EUROPEEN

(11) **EP 4 058 183 B1**
(45) Date de publication et mention de la délivrance du brevet: **23.08.2023**
(21) Numéro de dépôt: 20803617.8
(22) Date de dépôt: 13.11.2020
(51) Int. Cl.: B01J 4/00

(54) **REACTEUR D'HYDROLYSE D'HEXAFLUORURE D'URANIUM**
REAKTOR ZUR HYDROLYSE VON URANHEXAFLUORID
REACTOR FOR HYDROLYSIS OF URANIUM HEXAFLUORIDE

(30) Priorité: 15.11.2019 FR 1912785
(43) Date de publication de la demande: 21.09.2022
(73) Titulaire: Framatome, 92400 Courbevoie (FR)
(72) Inventeur: MESONA, Bruno, 26320 SAINT MARCEL LES VALENCE (FR); PAILLOU, Patrick, 26100 ROMANS (FR)
(74) Mandataire: Lavoix
(86) Numéro de dépôt international: PCT/EP2020/082122
(87) Numéro de publication internationale: WO 2021/094575

(56) Documents cités:
- WO-A1-99/28236
- WO-A1-2017/212224
- US-A1- 2018 141 059

## Description

La présente invention concerne en général les réacteurs d'hydrolyse d'hexafluorure d'uranium.

WO 99/28236 divulgue un exemple de réacteur d'hydrolyse d'hexafluorure d'uranium connu, comprenant :
- une chambre d'hydrolyse, comprenant une paroi délimitant un volume interne;
- un injecteur tubulaire comprenant des premier, deuxième et troisième canaux concentriques de circulation de fluides, monté à travers la paroi de la chambre d'hydrolyse.

L'injecteur tubulaire présente une extrémité interne située dans le volume interne et une extrémité externe située en dehors du volume interne. Les premier, deuxième et troisième canaux sont raccordés respectivement à une source d'hexafluorure d'uranium (UF₆), une source de gaz neutre et une source de vapeur d'eau.

L'injecteur tubulaire est une pièce critique pour le fonctionnement du réacteur d'hydrolyse.

Ces injecteurs tubulaires doivent être remplacés périodiquement. Il a été observé que les injecteurs tubulaires actuels peuvent présenter des défauts de qualité et ne pas permettre un fonctionnement adéquat du réacteur d'hydrolyse.

Par ailleurs, dans une installation comprenant plusieurs réacteurs d'hydrolyse, il a été observé qu'il était difficile d'utiliser un injecteur tubulaire monté sur un réacteur d'hydrolyse dans un autre réacteur d'hydrolyse.

Dans ce contexte, l'invention vise à proposer un réacteur d'hydrolyse dont l'injecteur tubulaire ne présente pas le défaut ci-dessus.

A cette fin, l'invention porte sur un réacteur d'hydrolyse d'hexafluorure d'uranium, comprenant :
- une chambre d'hydrolyse, comprenant une paroi délimitant un volume interne;
- un injecteur tubulaire comprenant des premier, deuxième et troisième canaux concentriques de circulation de fluides, l'injecteur tubulaire étant monté à travers la paroi de la chambre d'hydrolyse et présentant une extrémité interne située dans le volume interne et une extrémité externe située en dehors du volume interne;
dans lequel :
- les premier, deuxième et troisième canaux présentent à l'extrémité interne respectivement des première, deuxième et troisième ouvertures internes débouchant dans le volume interne;
- l'injecteur tubulaire comporte, à l'extrémité externe, des premier, deuxième et troisième raccords connectés fluidiquement respectivement aux premier, deuxième et troisième canaux et prévus pour être raccordés respectivement avec une source d'UF₆, une source de gaz neutre et une source de vapeur d'eau; et
- l'injecteur tubulaire est obtenu par fabrication additive. L'injecteur tubulaire présente des sections externes ovales sur au moins une partie de sa longueur.

Le réacteur peut en outre présenter une ou plusieurs des caractéristiques ci-dessous, considérées individuellement ou selon toutes les combinaisons techniquement possibles :
- le deuxième canal s'étend autour du premier canal, et le troisième canal s'étend autour de deuxième canal;
- les premier, deuxième et troisième canaux, à l'extrémité externe, s'étendent selon une direction longitudinale, le premier raccord s'étendant longitudinalement, les deuxième et troisième raccords formant chacun un angle compris entre 30° et 90° avec la direction longitudinale ;
- les deuxième et troisième raccords sont situés sensiblement au même niveau suivant la direction longitudinale ;
- l'injecteur tubulaire comporte un manchon d'axe central longitudinal, disposé autour de l'extrémité externe, une bride de fixation de l'injecteur tubulaire à la paroi de la chambre d'hydrolyse étant rapportée sur le manchon;
- l'injecteur tubulaire présente des première et seconde cloisons tubulaires internes délimitant respectivement le premier canal et le second canal, lesdites première et seconde cloisons tubulaires internes présentant des sections ovales sur au moins une partie de la longueur de l'injecteur tubulaire;
- l'injecteur tubulaire présente un premier tronçon d'extrémité rectiligne définissant l'extrémité interne, un second tronçon d'extrémité rectiligne définissant l'extrémité externe, et un tronçon intermédiaire arqué présentant lesdites sections externes ovales ;
- l'injecteur tubulaire porte une nervure de rigidification le long du tronçon intermédiaire arqué.

D'autres caractéristiques et avantages de l'invention ressortiront de la description détaillée qui en est donnée ci-dessous, à titre indicatif et nullement limitatif, en référence aux figures annexées, parmi lesquelles :
- [Fig 1] La figure 1 est une vue de côté, partielle, d'un exemple de réacteur d'hydrolyse selon l'invention ;
- [Fig 2] La figure 2 est une vue de dessus de l'injecteur tubulaire de la figure 1 ;
- [Fig 3] La figure 3 est une vue de l'extrémité interne de l'injecteur tubulaire des figures 1 et 2, prise selon l'incidence de la flèche III de la figure 1 ;
- [Fig 4] La figure 4 est une vue en coupe de l'extrémité externe de l'injecteur tubulaire, prise selon l'incidence des flèches IV de la figure 5 ; et
- [Fig 5] La figure 5 est une vue en coupe longitudinale de l'extrémité externe de l'injecteur tubulaire de la figure 4.

La conversion directe par voie sèche de l'UF₆ en oxyde d'uranium est utilisée industriellement depuis longtemps. Les équipements industriels de mise en oeuvre comprennent généralement, successivement :
- un réacteur muni de moyens d'introduction d'UF₆ et de vapeur d'eau, destinés à provoquer la formation du UO₂F₂ par hydrolyse ;
- un four tubulaire tournant de pyrohydrolyse destiné à transformer l'UO₂F₂ en oxyde d'uranium, muni de moyens de chauffage et de moyens d'introduction de vapeur d'eau et d'hydrogène à contre-courant ; et
- de moyens de conditionnement de la poudre d'oxyde.

Les réactions chimiques mises en oeuvre sont les suivantes :
- UF₆ + 2H₂O → UO₂F₂ + 4HF dans le réacteur ;
- UO₂F₂ + H₂O → UO₃ + 2HF ;
- UO₃ + H₂ → UO₂ + H₂O dans le four.

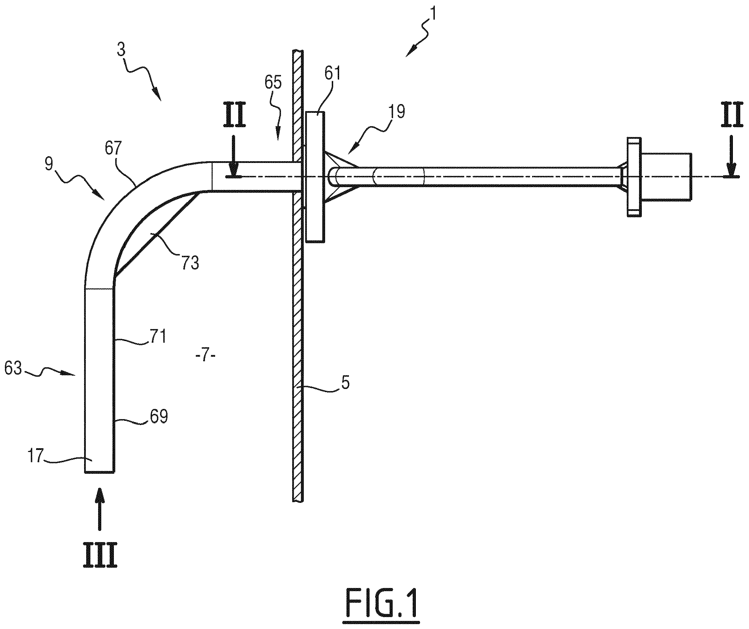

Le réacteur 1 représenté de manière partielle sur la figure 1 est destiné à mettre en oeuvre la première étape, c'est-à-dire l'hydrolyse de l'hexafluorure d'uranium UF₆ en UO₂F₂.

Ce réacteur 1 comprend une chambre d'hydrolyse 3, avec une paroi 5 délimitant un volume interne 7.

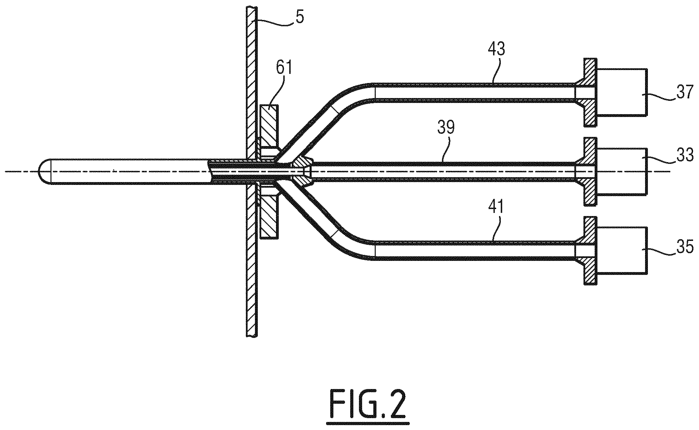

Le réacteur d'hydrolyse 1 comporte encore un injecteur tubulaire 9, comprenant des premier, deuxième et troisième canaux concentriques de circulation de fluide (voir figures 2 à 5). Comme visible sur la figure 1, l'injecteur tubulaire 9 est monté à travers la paroi 5 de la chambre d'hydrolyse 3 et présente une extrémité interne 17 située dans le volume interne 7, et une extrémité externe 19 située en dehors du volume interne 7.

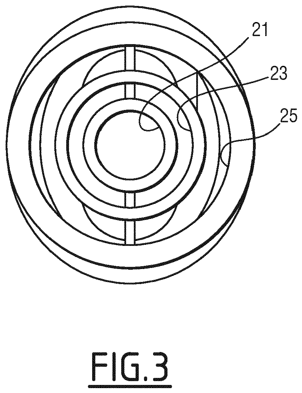

Les premier, deuxième et troisième canaux 11, 13, 15 présentent à leurs extrémités internes respectivement des première, deuxième et troisième ouvertures internes 21, 23, 25 (figure 3) débouchant dans le volume interne 7.

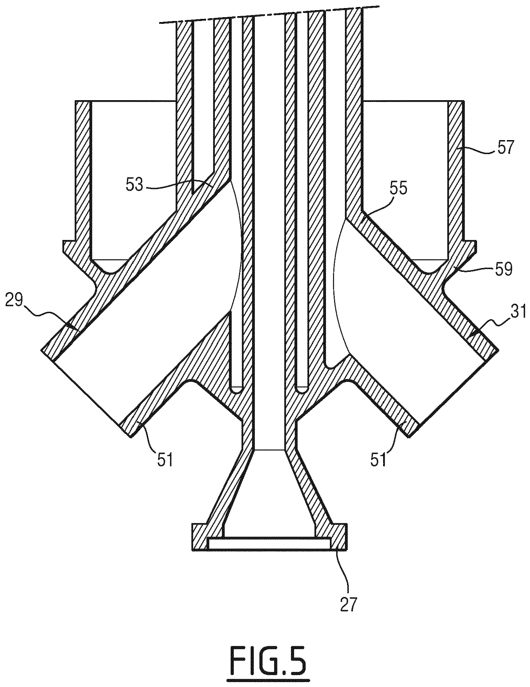

L'injecteur tubulaire 9 comporte, à son extrémité externe 19, des premier, second et troisième raccords 27, 29, 31 (voir figures 2 et 5) connectés fluidiquement aux premier, deuxième et troisième canaux 11, 13, 15 respectivement.

Les premier, deuxième et troisième raccords 27, 29, 31 sont prévus pour être raccordés respectivement avec une source 33 d'UF₆, une source de gaz neutre 35 et une source de vapeur d'eau 37.

Ces sources 33, 35, 37 sont représentées de manière symbolique sur la figure 2.

Dans l'exemple représenté, les premier, deuxième et troisième raccords 27, 29, 31 sont raccordés aux sources 33, 35, 37 par des tubes de raccord référencés respectivement 39, 41, 43. Ces tubes sont soudés respectivement aux raccords 27, 29, 31 et fixés par une liaison à brides aux sources 33, 35, 37.

Le réacteur 1 est typiquement contenu dans un caisson chauffant non représenté, constitué d'un matériau thermiquement isolant. A l'intérieur de ce caisson sont placées des résistances chauffantes non représentées.

L'UF₆ est injecté dans la chambre d'hydrolyse 3 sous forme gazeuse.

Après réaction d'hydrolyse, elle est transformée en UO₂F₂, qui se présente sous la forme de fines particules. Ces particules sont collectées par gravité au fond de la chambre d'hydrolyse 3, et transférées vers le four tubulaire où a lieu la transformation de l'UO₂F₂ en oxyde d'uranium.

Par exemple, ce transfert est effectué à l'aide d'une vis.

Comme visibles sur les figures 2 à 5, le deuxième canal 13 s'étend autour du premier canal 11, et le troisième canal 15 s'étend autour du deuxième canal 13.

En d'autres termes, les canaux sont agencés de telle sorte que le premier canal s'étende au centre de l'injecteur tubulaire, le troisième canal vers l'extérieur de l'injecteur tubulaire, le deuxième canal étant interposé entre le premier canal et le troisième canal.

Pour ce faire, l'injecteur tubulaire présente des première et seconde cloisons tubulaires internes 45, 47, délimitant respectivement le premier canal 11 et le deuxième canal 13. Une paroi externe 49 définit la surface externe de l'injecteur tubulaire. La première cloison interne sépare le premier canal 11 du deuxième canal 13. La seconde cloison interne 47 sépare le deuxième canal 13 du troisième canal 15. La paroi externe 49 ferme le troisième canal radialement vers l'extérieur.

Des entretoises, non représentées, sont placées dans le deuxième canal 13 et dans le troisième canal 15, de manière à maintenir un écartement constant entre la première cloison interne 45 et la seconde cloison interne 47, et entre la seconde cloison interne 47 et la paroi externe 49.

Ceci permet de conserver une section de passage constante de long des deuxième et troisième canaux 13, 15.

Selon l'invention, l'injecteur tubulaire 9 est obtenu par fabrication additive. Ce procédé de fabrication est également connu sous le nom d'impression 3D.

L'injecteur tubulaire est typiquement réalisé en métal, par exemple en inconel, ou en tout autre matériau adapté.

L'injecteur tubulaire 9 est de préférence entièrement réalisé par fabrication additive.

Notamment, les première et seconde cloisons internes 45, 47, la paroi externe 49, les premier, deuxième et troisième raccords 27, 29, 31 sont obtenus par fabrication additive.

Un tel mode de fabrication permet de garantir une excellente qualité de fabrication.

Ceci permet d'obtenir notamment excellente concentricité, et donc une section de passage extrêmement uniforme le long des canaux 11, 13 et 15.

Du fait de l'absence de soudure entre les pièces délimitant les canaux, les pertes de charge lors de la circulation des gaz le long des canaux sont extrêmement réduites. Ceci favorise de meilleures performances du réacteur d'hydrolyse.

Du fait de la réalisation de l'injecteur tubulaire par fabrication additive, il est possible d'obtenir une excellente concentricité des premier, deuxième et troisième canaux. De ce fait, il n'est pas nécessaire d'implanter un grand nombre d'entretoises entre les parois internes 45, 47 et entre la paroi interne 47 et l'extrémité externe 19. Ceci contribue également à diminuer les pertes de charge, et à obtenir des caractéristiques de fonctionnement qui soient reproductibles. Avec les injecteurs tubulaires de l'état de la technique, qui étaient mécanosoudés et non obtenus par fabrication additive, les pertes de charge imposées aux gaz circulant le long des canaux étaient variables d'un injecteur tubulaire à un autre.

Ceci expliquait en partie qu'un injecteur tubulaire adapté à un réacteur d'hydrolyse donné ne pouvait pas être réemployé dans un autre réacteur d'hydrolyse, différent.

Ainsi, les caractéristiques de fonctionnement de l'injecteur tubulaire, notamment les pertes de charge, sont beaucoup plus reproductibles. De ce fait, un injecteur tubulaire employé sur un réacteur d'hydrolyse donné peut beaucoup plus facilement être réutilisé sur un autre réacteur d'hydrolyse.

Comme visible notamment sur la figure 5, les premier, deuxième et troisième canaux 11, 13, 15 à l'extrémité externe 19 de l'injecteur tubulaire, s'étendent longitudinalement.

Le premier raccord 27 s'étend également longitudinalement le long de l'extrémité externe 19.

Les deuxième et troisième raccords 29, 31 forment chacun un angle compris entre 30° et 90° avec la direction longitudinale.

Dans l'exemple représenté, les deuxième et troisième raccords 29, 31 forment un angle de 45° avec la direction longitudinale.

Cet angle est pris typiquement entre l'axe central du conduit interne du raccord et la direction longitudinale.

Les premier, deuxième et troisième raccords 29, 31 sont disposés sensiblement dans un même plan, comme visible en comparant les figures 1 et 2.

Avantageusement, les deuxième 29 et troisième 31 raccords sont situés sensiblement au même niveau suivant la direction longitudinale.

Les deuxième et troisième raccords 29, 31 font saillie latéralement par rapport à la paroi externe 49 de l'injecteur tubulaire. Ils sont placés de part et d'autre du premier raccord 27.

Chacun des deuxième et troisième raccords 29, 31 présente la forme d'un tube dont une partie d'extrémité externe 51 fait saillie par rapport à la paroi externe 49.

Le deuxième raccord 29 présente une partie d'extrémité interne 53 qui traverse le troisième canal 15 et qui vient déboucher dans le deuxième canal 13 à travers la seconde cloison tubulaire 47.

La partie d'extrémité interne 53 est solidaire de la seconde cloison interne 47.

Le troisième raccord 31 présente une partie d'extrémité 55 qui est solidaire à la paroi externe 49. Le conduit interne du troisième raccord communique avec le troisième canal 15 à travers la cloison externe 49.

Les deuxième 29 et troisième 31 raccords sont situés sensiblement au même niveau longitudinalement au sens où les parties d'extrémités 53 et 55 des deuxième et troisième raccords sont situés longitudinalement sensiblement au même niveau.

En d'autres termes, les orifices ménagés respectivement dans la seconde cloison 47 et dans la paroi externe 49, et mettant en communication les canaux internes des raccords 29 et 31 avec le deuxième canal 13 et le troisième canal 15, sont situés longitudinalement sensiblement au même niveau.

Ceci est particulièrement avantageux, car la conception de l'extrémité externe 19 de l'injecteur tubulaire est de ce fait particulièrement compacte longitudinalement. Dans l'état de la technique, les raccords sont décalés longitudinalement les uns par rapport aux autres, du fait de la construction mécanosoudée de l'injecteur tubulaire.

Avoir une conception plus compacte longitudinalement facilite la fabrication de l'injecteur tubulaire par fabrication additive. Il n'est pas nécessaire de disposer d'un outil de fabrication de très grande taille, et une taille plus modeste suffit ce qui permet d'économiser en coût.

L'injecteur tubulaire 9 comporte par ailleurs un manchon 57 d'axe central longitudinal, disposé autour de l'extrémité externe 19.

Le manchon 57 présente une forme générale cylindrique, de section circulaire. Un cône 59 prolonge le manchon 57 longitudinalement vers le premier raccord 27. Le cône 59 est solidaire d'un des bords à contour fermé du manchon 57. Il est solidaire également de la paroi externe 49 et des deuxième et troisième raccords 29, 31. Le cône 59 permet de solidariser le manchon 57 à l'extrémité externe 19.

Le manchon 57 et le cône 59 font partie de l'injecteur tubulaire et sont eux aussi obtenus par fabrication additive.

Comme visible sur les figures 1 et 2, une bride 61 de fixation de l'injecteur tubulaire 9 à la paroi 5 de la chambre d'hydrolyse est rapportée sur le manchon 57.

La bride 61 vient s'adapter à l'extérieur du manchon 57, autour de celui-ci. Il présente donc un orifice central dans lequel est engagée la bride 61 qui est fixée au manchon 57 par tout moyen, par exemple par piqûre. La bride 61 est rigidement fixée sur la paroi 5 par tous moyens adaptés, par exemple des vis.

Avantageusement, l'injecteur tubulaire présente des sections externes ovales sur au moins une partie de sa longueur.

Typiquement, ces sections ovales sont de forme elliptique.

Comme visible sur la figure 1, l'injecteur tubulaire présente un premier tronçon d'extrémité 63 rectiligne, définissant l'extrémité interne 17.

L'injecteur tubulaire 9 présente également un second tronçon d'extrémité 65 rectiligne, définissant l'extrémité externe 19.

Entre les premier et second tronçons d'extrémité, l'injecteur tubulaire 9 présente un tronçon intermédiaire 67 arqué.

Par exemple, les tronçon 63 et 65 sont perpendiculaires l'un à l'autre.

Au moins le tronçon intermédiaire arqué présente des sections externes ovales. Dans l'exemple représenté, le second tronçon d'extrémité 65 présente également des sections externes ovales.

En revanche, le premier tronçon d'extrémité 63 comporte une portion terminale 69 de section circulaire, qui définit l'extrémité interne 17, le premier tronçon d'extrémité 63 comporte encore un tronçon de raccord 71, raccordant le tronçon intermédiaire 67 à la portion terminale 69. Le long du tronçon de raccord 71, la section externe passe progressivement d'une forme ovale à une forme circulaire. Le long des parties de l'injecteur tubulaire ayant une section externe ovale, les première et seconde cloisons tubulaires internes 45, 47 présentent elles aussi des sections ovales.

La section externe ovale de l'injecteur tubulaire est définie par la paroi externe.

Il est à noter que les sections ovales respectives des première et seconde cloisons tubulaires internes 45, 47 et de la paroi externe 49 sont parallèles les unes aux autres. En d'autres termes, elles sont concentriques. On entend par là que le centre géométrique des ovales formés par les cloisons 45, 47 et la paroi externe 49 sont confondus.

Le fait de prévoir des sections externes ovales permet de faciliter la fabrication additive.

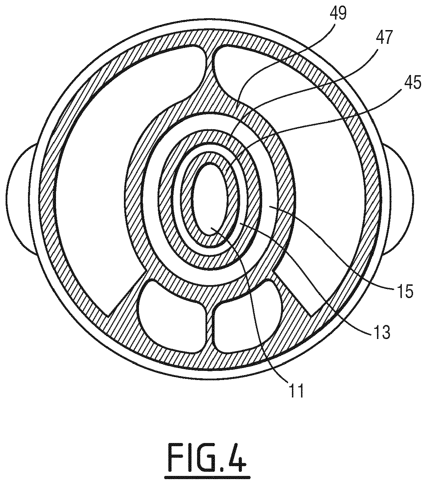

En effet, l'injecteur tubulaire est fabriqué selon l'orientation illustrée sur la figure 4, avec le grand axe de l'ovale orienté suivant la direction verticale.

Lors de la réalisation de la partie supérieure de la section, le risque d'effondrement est réduit par rapport au risque d'effondrement si la section est circulaire.

Il est à noter que l'injecteur tubulaire porte une nervure de rigidification 73 le long du tronçon intermédiaire arqué. Ceci permet de renforcer la rigidité de l'injecteur tubulaire. Comme visible sur la figure 1, à l'intérieur du réacteur d'hydrolyse, le premier tronçon d'extrémité est d'orientation verticale. L'extrémité interne pointe vers le bas. Le second tronçon d'extrémité est d'orientation sensiblement horizontale.

## Revendications

1. Réacteur (1) d'hydrolyse d'hexafluorure d'uranium, comprenant :
- une chambre d'hydrolyse (3), comprenant une paroi (5) délimitant un volume interne (7) ;
- un injecteur tubulaire (9) comprenant des premier (11), deuxième (13) et troisième (15) canaux concentriques de circulation de fluides, l'injecteur tubulaire (9) étant monté à travers la paroi (5) de la chambre d'hydrolyse (3) et présentant une extrémité interne (17) située dans le volume interne (7) et une extrémité externe (19) située en dehors du volume interne (7) ;
dans lequel :
- les premier (11), deuxième (13) et troisième (15) canaux présentent à l'extrémité interne (17) respectivement des première (21), deuxième (23) et troisième (25) ouvertures internes débouchant dans le volume interne (7) ;
- l'injecteur tubulaire (9) comporte, à l'extrémité externe (19), des premier (27), deuxième (29) et troisième (31) raccords connectés fluidiquement respectivement aux premier (11), deuxième (13) et troisième (15) canaux et prévus pour être raccordés respectivement avec une source d'UF₆, une source de gaz neutre et une source de vapeur d'eau; et
- l'injecteur tubulaire (9) est obtenu par fabrication additive, l'injecteur tubulaire (9) présentant des sections externes ovales sur au moins une partie de sa longueur.

2. Réacteur (1) selon la revendication 1, dans lequel le deuxième canal (13) s'étend autour du premier canal (11), et le troisième canal (15) s'étend autour de deuxième canal (13).

3. Réacteur (1) selon la revendication 1 ou 2, dans lequel les premier (11), deuxième (13) et troisième (15) canaux, à l'extrémité externe (19), s'étendent selon une direction longitudinale, le premier raccord (27) s'étendant longitudinalement, les deuxième (29) et troisième (31) raccords formant chacun un angle compris entre 30° et 90° avec la direction longitudinale.

4. Réacteur (1) selon la revendication 3, dans lequel les deuxième (29) et troisième (31) raccords sont situés sensiblement au même niveau suivant la direction longitudinale.

5. Réacteur (1) selon la revendication 3 ou 4, dans lequel l'injecteur tubulaire (9) comporte un manchon (57) d'axe central longitudinal, disposé autour de l'extrémité externe (19), une bride (61) de fixation de l'injecteur tubulaire (9) à la paroi (5) de la chambre d'hydrolyse (3) étant rapportée sur le manchon (57).

6. Réacteur (1) selon l'une quelconque des revendications 1 à 5, dans lequel l'injecteur tubulaire (9) présente des première (45) et seconde (47) cloisons tubulaires internes délimitant respectivement le premier canal (11) et le second canal (13), lesdites première (45) et seconde (47) cloisons tubulaires internes présentant des sections ovales sur au moins une partie de la longueur de l'injecteur tubulaire (9).

7. Réacteur (1) selon l'une quelconque des revendications 1 à 6, dans lequel l'injecteur tubulaire (9) présente un premier tronçon d'extrémité (63) rectiligne définissant l'extrémité interne (17), un second tronçon d'extrémité (65) rectiligne définissant l'extrémité externe (19), et un tronçon intermédiaire arqué (67) présentant lesdites sections externes ovales.

8. Réacteur (1) selon la revendication 7, dans lequel l'injecteur tubulaire (9) porte une nervure de rigidification (73) le long du tronçon intermédiaire arqué (67).

## Patentansprüche

1. Reaktor (1) zur Hydrolyse von Uranhexafluorid, umfassend:
- ein Hydrolysekammer (3), umfassend mindestens eine Wand (5), die ein Innenvolumen (7) begrenzt;
- einen rohrförmigen Injektor (9), umfassend einen ersten (11), einen zweiten (13) und einen dritten (15) konzentrischen Fluidzirkulationskanal, wobei der rohrförmige Injektor (9) durch die durch die Wand (5) der Hydrolysekammer (3) geführt wird und ein inneres Ende (17), das sich innerhalb des Innenvolumens (7) befindet, und ein äußeres Ende (19), das sich außerhalb des Innenvolumens (7) befindet, aufweist;
wobei:
- der erste (11), der zweite (13) und der dritte (15) Kanal am inneren Ende (17) jeweils eine erste (21), eine zweite (23) und eine dritte (25) innere Öffnung aufweisen, die in das Innenvolumen (7) münden;
- der rohrförmige Injektor (9) an dem äußeren Ende (19) einen ersten (27), einen zweiten (29) und einen dritten (31) Anschluss umfasst, die fluidisch jeweils mit dem ersten (11), dem zweiten (13) und dem dritten (15) Kanal verbunden sind, um jeweils mit einer UF₆-Quelle, einer Quelle für neutrales Gas und einer Quelle für Wasserdampf verbunden zu werden; und
- der rohrförmige Injektor (9) durch additive Fertigung erlangt wird, wobei der rohrförmige Injektor (9) über mindestens einen Teil seiner Länge ovale Außenabschnitte aufweist.

2. Reaktor (1) nach Anspruch 1, wobei der zweite Kanal (13) sich um den ersten Kanal (11) erstreckt und der dritte Kanal (15) sich um den zweiten Kanal (13) erstreckt.

3. Reaktor (1) nach Anspruch 1 oder 2, wobei sich der erste (11), der zweite (13) und der dritte (15) Kanal an dem äußeren Ende (19) in Längsrichtung in einer Längsrichtung erstrecken, wobei der erste Anschluss (27) sich in Längsrichtung erstreckt und der zweite (29) und der dritte (31) Anschluss jeweils einen Winkel zwischen 30° und 90° mit der Längsrichtung bilden.

4. Reaktor (1) nach Anspruch 3, wobei der zweite (29) und der dritte (31) Anschluss in Längsrichtung im Wesentlichen auf gleicher Höhe angeordnet sind.

5. Reaktor (1) nach Anspruch 3 oder 4, wobei der rohrförmige Injektor (9) eine Hülse (57) mit einer zentralen Längsachse aufweist, die um das äußere Ende (19) angeordnet ist, wobei ein Flansch (61) zum Befestigen des rohrförmigen Injektors (9) an der Wand (5) der Hydrolysekammer (3) an der Hülse (57) angebracht ist.

6. Reaktor (1) nach einem der Ansprüche 1 bis 5, wobei der rohrförmige Injektor (9) eine erste (45) und eine zweite (47) innere rohrförmige Trennwand aufweist, die jeweils den ersten Kanal (11) und den zweiten Kanal (13) begrenzen, wobei die erste (45) und die zweite (47) innere rohrförmige Trennwand über mindestens einen Teil der Länge des rohrförmigen Injektors (9) ovale Abschnitte aufweisen.

7. Reaktor (1) nach einem der Ansprüche 1 bis 6, wobei der rohrförmige Injektor (9) einen ersten geraden Endabschnitt (63) aufweist, der das Ende definiert (17), einen zweiten geraden Endabschnitt (65), der das äußere Ende (19) definiert, und einen gebogenen Zwischenabschnitt (67), der die ovalen äußeren Abschnitte aufweist.

8. Reaktor (1) nach Anspruch 7, wobei der rohrförmige Injektor (9) eine Versteifungsrippe (73) entlang des bogenförmigen Zwischenabschnitts (67) trägt.

## Claims

1. A uranium hexafluoride hydrolysis reactor (1), comprising:
- a hydrolysis chamber (3), comprising a wall (5) delimiting an internal volume (7);
- a tubular injector (9) comprising first (11), second (13) and third (15) concentric fluid circulation ducts, the tubular injector (9) being mounted through the wall (5) of the hydrolysis chamber (3) and presenting an inner end (17) located in the internal volume (7) and an outer end (19) located outside the internal volume (7);
wherein:
- the first (11), second (13) and third (15) ducts present at the inner end (17) first (21), second (23) and third (25) internal openings respectively, opening into the internal volume (7);
- the tubular injector (9) includes, at the outer end (19), first (27), second (29) and third (31) fittings fluidically connected respectively to the first (11), second (13) and third (15) ducts and intended to be connected respectively with a source of UF₆, a source of inert gas and a source of water vapor; and
- the tubular injector (9) is obtained by additive manufacturing, the tubular injector (9) presenting oval outer sections over at least a part of its length.

2. The reactor (1) according to claim 1, wherein the second duct (13) extends around the first duct (11), and the third duct (15) extends around the second duct (13).

3. The reactor (1) according to claim 1 or 2, wherein the first (11), second (13), and third (15) ducts at the outer end (19) extend according to a longitudinal direction, the first fitting (27) extending longitudinally, the second (29) and third (31) fittings each forming an angle of between 30° and 90° with the longitudinal direction.

4. The reactor (1) according to claim 3, wherein the second (29) and third (31) fittings are located at substantially the same level along the longitudinal direction.

5. The reactor (1) according to claim 3 or 4, wherein the tubular injector (9) includes a sleeve (57) with a central longitudinal axis, arranged around the outer end (19), a flange (61) for fixing the tubular injector (9) to the wall (5) of the hydrolysis chamber (3) being attached to the sleeve (57).

6. The reactor (1) according to anyone of the claims 1 to 5, wherein the tubular injector (9) presents first (45) and second (47) internal tubular walls delimiting the first duct (11) and the second duct (13), respectively, said first (45) and second (47) internal tubular walls presenting oval cross-sections over at least a portion of the length of the tubular injector (9).

7. The reactor (1) according to anyone of the claims 1 to 6, wherein the tubular injector (9) presents a first rectilinear end section (63) defining the inner end (17), a second rectilinear end section (65) defining the outer end (19), and a curved intermediate section (67) presenting said oval outer sections.

8. The reactor (1) according to claim 7, wherein the tubular injector (9) has a stiffening rib (73) along the curved intermediate section (67).
